# EUROPEAN PATENT APPLICATION

(11) **EP 4 575 299 A1**
(43) Date of publication of application: **25.06.2025**
(21) Application number: 24220089.7
(22) Date of filing: 16.12.2024
(51) Int. Cl.: F17C 1/00

(54) **METHODS AND SYSTEMS FOR UNDERGROUND GAS STORAGE**

(30) Priority: 18.12.2023 US 202318543024
(71) Applicant: Air Products and Chemicals, Inc., Allentown, PA 18195-1501 (US)
(72) Inventor: Amy, Fabrice, Macungie 18062 (US); Zordan, David George, Quakertown 18951 (US)
(74) Representative: Kador & Partner Part mbB

(57) **Abstract**

Disclosed herein are methods and systems for storing and withdrawing a light gas such as helium or hydrogen in an underground formation. The method includes pumping a cryogenic liquid stream to produce a pumped liquid stream, and vaporizing the pumped liquid stream to produce a first-high pressure gas steam. The method further includes feeding the first high-pressure gas stream to a gas storage cavern.

## Description

### BACKGROUND

Light gases such as helium and hydrogen may be stored underground in formations such as salt dome caverns. Light gases may be transported to the storage formation as a cryogenic liquid where typical practice is to vaporize the cryogenic liquid and compress the light gas for injection into the formation. When the light gas is withdrawn it may require purification before transportation and/or final use.

### SUMMARY

Disclosed herein is an example of a method for storing cryogenic fluid. The method includes pumping a cryogenic liquid stream to produce a pumped liquid stream, and vaporizing the pumped liquid stream to produce a first-high pressure gas steam. The method further includes feeding the first high-pressure gas stream to a gas storage cavern.

Disclosed herein is an example of a method of removing a withdrawal gas stream from a gas storage cavern. The method includes cooling the withdrawal gas stream to produce a condensate stream and an overhead stream. The method further includes returning the condensate stream to the gas storage cavern.

Disclosed herein is an example of a system for storing a cryogenic liquid. The system includes a cryogenic pump in fluid flow communication with a cryogenic liquid source. The system further includes a high-pressure vaporizer in fluid flow communication with the cryogenic pump. The system further includes a gas storage cavern in fluid flow communication with the high-pressure vaporizer.

It is to be understood that both the foregoing general description and the following detailed description are exemplary and explanatory in nature and are intended to provide an understanding of the present disclosure without limiting the scope of the present disclosure. In that regard, additional aspects, features, and advantages of the present disclosure will be apparent to one skilled in the art from the following detailed description.

### BRIEF DESCRIPTION OF THE DRAWING

The drawings illustrate certain aspects of some of the embodiments of the present invention and should not be used to limit or define the invention.

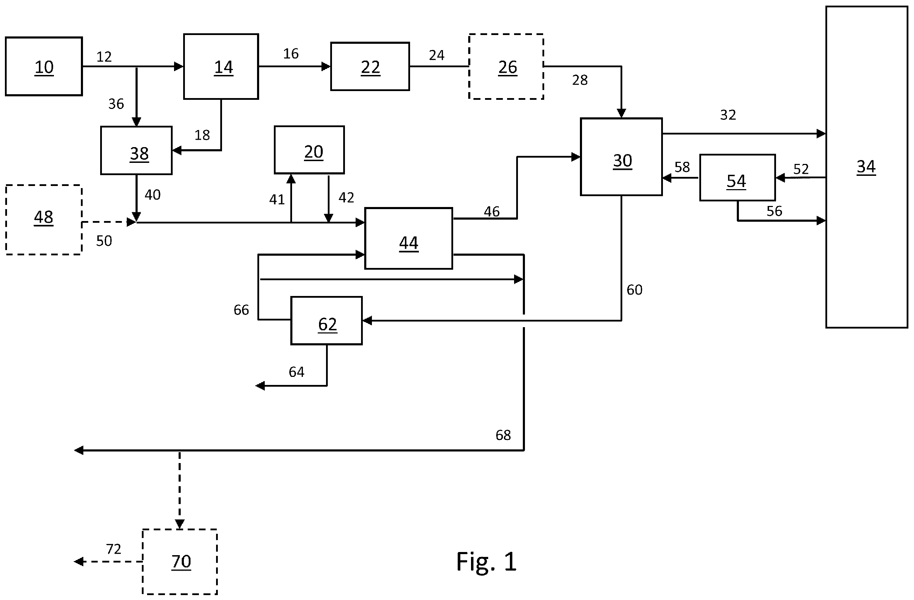

Figure 1 is a schematic view depicting an embodiment of a light gas storage process according to one or more aspects of the present disclosure.

### DETAILED DESCRIPTION

The present disclosure is directed to methods and systems for storing and withdrawing a light gas such as helium or hydrogen in an underground formation. The methods and systems may include pumping a cryogenic liquid and vaporizing the pumped cryogenic liquid to produce a high-pressure gas stream for injection. The methods and systems may include withdrawing a stored gas stream from the formation, partially condensing the stored gas stream, and returning a condensed liquid stream to the formation.

In accordance with the present embodiments, cryogenic liquid may be pumped using a cryogenic pump, for example to a pressure ranging from 2500 to 5000 psia (170 to 350 bar) then vaporized in a high-pressure vaporizer. Vaporizing at high pressure allows a pressure regulator downstream of the high-pressure vaporizer to further increase the pressure of the resulting gas stream because of the higher mass flow rate provided by the high-pressure vaporizer. Cryogenic pumps are more energy efficient than compressors to deliver a gas stream to the same pressure. For example, the Lawrence Livermore National Laboratory reported (LLNL-JRNL-746861) that filling a hydrogen tank to 700 bar pressure required 3 kWh/kg H2 using compressors but only 1.1 kWh/kg H2 when using cryogenic pumps. The pressure regulator may reduce the pressure required in the cryogenic pump and further improve the energy efficiency of the process. The high-pressure gas stream may range in pressure from 1000 to 3500 psia (70 to 240 bar) then be stored, for example in an underground formation. The underground formation may comprise a salt cavern formed within an impermeable solid salt layer. The pressure may be controlled in the salt cavern by injecting or withdrawing saturated brine. The underground formation may comprise a permeable rock formation sealed between impermeable layers. The pressure in the underground storage cavern may range from 800 to 2500 psia (55 to 170 bar). A low-pressure vaporizer may be used when the cryogenic liquid supply is at too low a pressure to supply the high-pressure vaporizer. The low-pressure vaporizer may also be used as a heat exchanger to bring cold light gas such as boil-off gas to near ambient temperatures before compression and storage.

The storage cavern may be maintained in between a lower pressure limit and an upper pressure limit. The lower pressure limit may be defined as a pressure sufficient to keep the storage cavern from caving in, for example ranging from 20% to 40% of the lithostatic pressure of the surrounding formation. The lower pressure limit may be a function of the structural integrity of the salt formation. For typical formation materials this may range from 0.2 psi/ft to 0.4 psi/ft (0.04 to 0.09 bar/m) of depth below the surface. The storage cavern is accessed via a well with a well casing, typically comprising one or more cemented steel sections. The upper pressure limit may be defined relative to the lithostatic pressure at the point where the bottom of the well casing meets the top of the storage cavern, for example 85% of the lithostatic pressure. For typical formation materials this may be around 1 psi/ft of depth (0.2 bar/m) below the surface.

A withdrawal gas may be removed from storage at a wellhead. In some embodiments, for example when gas is stored in a salt cavern that uses brine to control the pressure, the withdrawal gas may be saturated with water vapor at a temperature above the ambient temperature at the surface. The withdrawal gas may be cooled and an aqueous condensate phase may be separated and returned to the underground storage cavern. The condensate may be returned by gravity. The wellhead may comprise a heat exchanger and vapor-liquid separator to improve the efficiency of returning the condensate to the underground storage cavern. The withdrawal gas may be further dehydrated and may have additional impurities such as N2, O2, CH4, CO2, and H2S removed before compression and/or liquefaction to deliver the resulting product gas to the customer. Purification of the withdrawal gas may be achieved through pressure swing adsorption and/or temperature swing adsorption.

Figure 1 is a schematic view depicting an embodiment of a light gas storage process according to one or more aspects of the present disclosure. Cryogenic liquid source 10, such as an ISO container, delivers cryogenic liquid stream 12. Cryogenic liquid stream 12 may comprise a "light gas" such as helium or hydrogen that boils at a cryogenic temperature. Cryogenic liquid stream 12 may be pumped by cryogenic liquid pump 14 to produce pumped liquid stream 16. Cryogenic liquid pump 14 may also produce a boil-off gas stream 18, especially during start-up, that may be warmed in low-pressure vaporizer 38 and captured in gas bag 20. Pumped liquid stream 16 may be vaporized in high-pressure vaporizer 22 to produce first high-pressure gas stream 24. High-pressure vaporizer 22 may comprise a heat exchanger, for example to exchange heat indirectly against ambient air. First high-pressure gas stream 24 may be further pressurized by utilizing the volumetric expansion of the phase change from liquid to vapor against pressure regulator 26 to produce second high-pressure gas stream 28. Pressure regulator 26 may comprise any means of increasing the pressure of a stream by restricting the flow, including back-pressure regulators, control valves, and orifices. The flow rate of second high-pressure gas stream 28 may then be monitored and/or controlled by flow metering system 30, resulting in a storage gas stream 32 entering gas storage cavern 34. Gas storage cavern may comprise a cavity within a salt formation, and the pressure of the gas storage cavern may be controlled by injection or withdrawal of an incompressible fluid such as brine. At least a portion of the cryogenic liquid stream 12 may be divided to form second cryogenic liquid stream 36 and may be vaporized in low-pressure vaporizer 38 to produce low-pressure vapor stream 40. Low-pressure vaporizer 38 may be utilized in situations including emptying the cryogenic liquid source 10 at a low pressure and reducing the pressure of the cyrogenic liquid source 10 back below the critical point to allow cryogenic pumping. A person of skill in the art will appreciate that low-pressure vaporizer 38 cannot provide enough flow to increase pressure in a pressure regulator, in contrast with high-pressure vaporizer 22. Low-pressure vapor stream 40 may be compressed in gas compressor 44 to produce compressed gas stream 46 which may be delivered to flow metering system 30. Gas compressor 44 may comprise one or more individual compressors in series and/or parallel. Gas bag 20 may be used as surge capacity for gas compressor 44 by accepting gas bag inflow 41 and delivering gas bag outflow 42 to gas compressor 44. In some embodiments, gaseous source 48 may supply gaseous stream 50 which may also be compressed in gas compressor 44.

Light gas may be withdrawn from gas storage cavern 34 via a wellhead as withdrawal gas 52. Withdrawal gas 52 may comprise contaminants such as H2O, N2, O2, CH4, CO2, and H2S. In cases where the gas storage cavern 34 is a salt dome that uses liquid brine to maintain constant pressure, withdrawal gas 52 may be saturated with water vapor. Withdrawal gas 52 may be cooled in chiller 54 below the dew point of water to produce a condensate stream 56 which may be returned to the gas storage cavern 34. Chiller 54 may be integrated with the wellhead to allow the condensate stream 56 to enter the gas storage cavern 34 by gravity flow alone, eliminating the need for a pump to recycle the condensate stream 56. Chiller 54 may comprise a heat exchanger and may comprise a mechanical refrigerator such as a closed-loop glycol chiller. Overhead gas 58 leaving the chiller 54 may be controlled by the same flow metering system 30 to monitor and/or control the flow of untreated gas 60 to gas treatment system 62. Gas treatment system 62 may comprise an adsorber to remove contaminants such as H2O, N2, O2, CH4, CO2, and H2S, which exit as contaminants-enriched tail gas stream 64. Tail gas stream 64 may be vented or flared as required based on composition and regulatory requirements. Treated gas stream 66 exits the gas treatment system 62 and may be compressed if needed for end use and/or transportation. Compression may take place in gas compressor 44. Product gas 68 may be delivered to end users, pipelines, and/or tube trailers. At least a portion of product gas 68 may be liquefied in liquefier 70 to form liquid product 72.

Accordingly, the present disclosure may provide methods and systems for storing and withdrawing a light gas such as helium or hydrogen in an underground formation. The methods and systems may include any of the various features disclosed heren, including one or more of the following aspects.

Aspect 1: A method comprising pumping a cryogenic liquid stream to produce a pumped liquid stream; vaporizing the pumped liquid stream to produce a first high-pressure gas stream; and feeding the first high-pressure gas stream to a gas storage cavern.

Aspect 2: A method according to Aspect 1, further comprising increasing the pressure of the first high-pressure gas stream prior to feeding to the gas storage cavern.

Aspect 3: A method according to Aspect 2, wherein the pressure of the first high-pressure gas stream is increased using a pressure regulator.

Aspect 4: A method according to any of Aspects 1 to 3, further comprising feeding a stream derived from the first high-pressure gas stream to the gas storage cavern.

Aspect 5: A method according to any of Aspects 1 to 4, further comprising dividing at least a portion of the cryogenic liquid stream to produce a second cryogenic liquid stream; vaporizing the second cryogenic liquid stream to produce a low-pressure vapor stream; compressing the low-pressure vapor stream to produce a compressed gas stream; and feeding the compressed gas stream to the gas storage cavern.

Aspect 6: A method according to Aspect 5, further comprising feeding a stream derived from the compressed gas stream to the gas storage cavern.

Aspect 7: A method according to any of Aspects 1 to 6, wherein a pressure of the first high-pressure gas stream ranges from 20% to 85% of a lithostatic pressure of the gas storage cavern.

Aspect 8: A method according to any of Aspects 1 to 7, wherein the gas storage cavern comprises a cavity in a salt formation.

Aspect 9: A method according to any of Aspects 1 to 8, further comprising recovering a boil-off gas while pumping the cryogenic liquid stream; heating the boil-off gas to produce a warm boil-off gas; compressing the warm boil-off gas to produce a compressed boil-off gas; and feeding the compressed boil-off gas to the gas storage cavern.

Aspect 10: A method comprising removing a withdrawal gas stream from a gas storage cavern; cooling the withdrawal gas stream to produce a condensate stream and an overhead stream; and returning the condensate stream to the gas storage cavern.

Aspect 11: A method according to Aspect 10, wherein the condensate stream is returned to the gas storage cavern by gravity.

Aspect 12: A method according to Aspect 10 or Aspect 11, wherein the withdrawal gas stream is cooled by indirect heat exchange.

Aspect 13: A method according to any of Aspects 10 to 12, further comprising removing at least one of H2O, N2, O2, CH4, CO2, and H2S from the overhead gas stream to produce a treated gas stream and a tail gas stream.

Aspect 14: A method according to Aspect 13, wherein the at least one of H2O, N2, O2, CH4, CO2, and H2S is removed from the overhead gas stream by adsorption.

Aspect 15: A method according to any of Aspects 10 to 14, wherein the pressure of the gas storage cavern is controlled by injecting or withdrawing an incompressible fluid.

Aspect 16: A method according to any of Aspects 10 to 15, wherein the gas storage cavern comprises a cavity in a salt formation.

Aspect 17: A system for storing a cryogenic liquid comprising a cryogenic pump in fluid flow communication with a cryogenic liquid source, wherein the cryogenic pump is configured to pump a cryogenic liquid stream and produce a pumped liquid stream; a high-pressure vaporizer in fluid flow communication with the cryogenic pump, wherein the high-pressure vaporizer is configured to vaporize the pumped liquid stream and produce a high-pressure gas stream; and a gas storage cavern in fluid flow communication with the high-pressure vaporizer, wherein the gas storage cavern is configured to accept the high-pressure gas stream.

Aspect 18: A system according to Aspect 17, further comprising a pressure regulator in fluid flow communication with the high-pressure vaporizer and gas storage cavern configured to increase the pressure of the high-pressure gas stream.

Aspect 19: A system according to Aspect 17 or Aspect 18, further comprising a low-pressure vaporizer in fluid flow communication with the cryogenic liquid source configured to vaporize at least a portion of the cryogenic liquid stream and produce a low-pressure vapor stream; and a compressor in fluid flow communication with the low-pressure vaporizer and the gas storage cavern configured to compress the low-pressure vapor stream and produce a compressed gas stream.

Aspect 20: A system according to Aspect 19, further comprising a gas bag in fluid flow communication with the low-pressure vaporizer and the compressor.

Aspect 21: A system according to Aspect 19 or Aspect 20, wherein the low-pressure vaporizer is in fluid flow communication with the cryogenic pump configured to accept a boil-off gas stream from the cryogenic pump.

Aspect 22: A system according to any of Aspects 17 to 21, wherein the gas storage cavern comprises a cavity in a salt formation.

The articles "a" or "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The term "and/or" placed between a first entity and a second entity includes any of the meanings of (1) only the first entity, (2) only the second entity, or (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B but not C, (5) A and C but not B, (6) B and C but not A, and (7) A and B and C.

The adjective "any" means one, some, or all, indiscriminately of quantity.

The phrase "at least a portion" means "a portion or all." The "at least a portion of a stream" has the same composition, with the same concentration of each of the species, as the stream from which it is derived.

As used herein, "first," "second," "third," etc. are used to distinguish among a plurality of steps and/or features, and is not indicative of the total number, or relative position in time and/or space, unless expressly stated as such.

The terms "depleted" or "lean" mean having a lesser mole percent concentration of the indicated component than the original stream from which it was formed. "Depleted" and "lean" do not mean that the stream is completely lacking the indicated component.

The terms "rich" or "enriched" mean having a greater mole percent concentration of the indicated component than the original stream from which it was formed.

"Downstream" and "upstream" refer to the intended flow direction of the process fluid transferred. If the intended flow direction of the process fluid is from the first device to the second device, the second device is downstream of the first device. In case of a recycle stream, downstream and upstream refer to the first pass of the process fluid.

It should be understood that, although individual examples may be discussed herein, the present disclosure covers all combinations of the disclosed examples, including, without limitation, the different component combinations, method step combinations, and properties of the system.

While the principles of the invention have been described above in connection with preferred embodiments, it is to be clearly understood that this description is made only by way of example and not as a limitation of the scope of the invention.

## Claims

1. A method comprising:
pumping a cryogenic liquid stream to produce a pumped liquid stream;
vaporizing the pumped liquid stream to produce a first high-pressure gas stream; and
feeding the first high-pressure gas stream to a gas storage cavern.

2. The method of claim 1, further comprising increasing the pressure of the first high-pressure gas stream prior to feeding to the gas storage cavern.

3. The method of claim 2, wherein the pressure of the first high-pressure gas stream is increased using a pressure regulator.

4. The method of any one of the preceding claims, further comprising dividing at least
a portion of the cryogenic liquid stream to produce a second cryogenic liquid stream;
vaporizing the second cryogenic liquid stream to produce a low-pressure vapor stream;
compressing the low-pressure vapor stream to produce a compressed gas stream; and
feeding the compressed gas stream to the gas storage cavern.

5. The method of any one of the preceding claims, wherein a pressure of the first high-pressure gas stream ranges from 20% to 85% of a lithostatic pressure of the gas storage cavern, and/or wherein the gas storage cavern comprises a cavity in a salt formation.

6. The method of any one of the preceding claims, further comprising recovering a boil-off gas while pumping the cryogenic liquid stream;
heating the boil-off gas to produce a warm boil-off gas;
compressing the warm boil-off gas to produce a compressed boil-off gas;
and feeding the compressed boil-off gas to the gas storage cavern.

7. A method comprising:
removing a withdrawal gas stream from a gas storage cavern;
cooling the withdrawal gas stream to produce a condensate stream and an overhead stream; and
returning the condensate stream to the gas storage cavern.

8. The method of claim 7, wherein the condensate stream is returned to the gas storage cavern by gravity, and/or wherein the withdrawal gas stream is cooled by indirect heat exchange.

9. The method of claim 7 or 8, further comprising removing at least one of H2O, N2, O2, CH4, CO2, and H2S from the overhead gas stream to produce a treated gas stream and a tail gas stream.

10. The method of claim 9, wherein the at least one of H2O, N2, O2, CH4, CO2, and H2S is removed from the overhead gas stream by adsorption.

11. The method of any one of claims 7 to 10, wherein the pressure of the gas storage cavern is controlled by injecting or withdrawing an incompressible fluid, and/or wherein the gas storage cavern comprises a cavity in a salt formation.

12. A system for storing a cryogenic liquid comprising:
a cryogenic pump in fluid flow communication with a cryogenic liquid source, wherein the cryogenic pump is configured to pump a cryogenic liquid stream and produce a pumped liquid stream;
a high-pressure vaporizer in fluid flow communication with the cryogenic pump, wherein the high-pressure vaporizer is configured to vaporize the pumped liquid stream and produce a high-pressure gas stream; and
a gas storage cavern in fluid flow communication with the high-pressure vaporizer, wherein the gas storage cavern is configured to accept the high-pressure gas stream.

13. The system of claim 12, further comprising a pressure regulator in fluid flow communication with the high-pressure vaporizer and gas storage cavern configured to increase the pressure of the high-pressure gas stream.

14. The system of claim 13, further comprising a low-pressure vaporizer in fluid flow communication with the cryogenic liquid source configured to vaporize at least a portion of the cryogenic liquid stream and produce a low-pressure vapor stream; and
a compressor in fluid flow communication with the low-pressure vaporizer and the gas storage cavern configured to compress the low-pressure vapor stream and produce a compressed gas stream.

15. The system of claim 14, further comprising a gas bag in fluid flow communication with the low-pressure vaporizer and the compressor, and/or wherein the low-pressure vaporizer is in fluid flow communication with the cryogenic pump configured to accept a boil-off gas stream from the cryogenic pump.

16. The system of any one of claims 13 to 15, wherein the gas storage cavern comprises a cavity in a salt formation.
